# EUROPÄISCHE PATENTSCHRIFT

(11) **EP 3 130 018 B1**
(45) Veröffentlichungstag und Bekanntmachung des Hinweises auf die Patenterteilung: **06.05.2020**
(21) Anmeldenummer: 15707301.6
(22) Anmeldetag: 12.02.2015
(51) Int. Cl.: H01M 2/02, H01M 10/04, H01M 10/058

(54) **VERFAHREN UND VORRICHTUNG ZUM AUFBRINGEN EINES SELBSTHAFTENDEN FILMS AUF EINE ELEKTRISCHE ENERGIESPEICHERZELLE**
PROCESS AND DEVICE FOR APPLYING A SELF-ADHESIVE FILM ON A BATTERY CELL
PROCÉDÉ ET APPAREILLAGE POUR L'APPLICATION D'UNE COUCHE AUTOADHÉSIVE SUR UNE CELLULE DE STOCKAGE D'ENERGIE ÉLECTRIQUE

(30) Priorität: 10.04.2014 DE 102014206890
(43) Veröffentlichungstag der Anmeldung: 15.02.2017
(73) Patentinhaber: Bayerische Motoren Werke Aktiengesellschaft, 80809 München (DE)
(72) Erfinder: WÖHRLE, Thomas, 80807 München (DE); OGIHARA, Hideki, 85778 Haimhausen (DE); ZEILINGER, Tobias, 80801 München (DE)
(74) Vertreter: Diener, Reinhold Jürgen
(86) Internationale Anmeldenummer: PCT/EP2015/052907
(87) Internationale Veröffentlichungsnummer: WO 2015/154899

(56) Entgegenhaltungen:
- WO-A1-2012/120443
- DE-A1-102008 061 011
- DE-A1-102011 084 692
- GB-A- 2 056 401
- US-A1- 2007 154 787
- US-A1- 2011 008 672
- US-A1- 2012 115 025
- US-A1- 2012 202 051

## Beschreibung

Die Erfindung betrifft ein Verfahren und eine Vorrichtung zum zumindest teilumfänglichen Herstellen einer elektrischen Energiespeicherzelle. Die Energiespeicherzelle weist ein Speicherzellengehäuse auf, in dem eine für den Betrieb der Energiespeicherzelle benötigte Elektroden/Separatoren-Anordnung untergebracht ist. Die Elektroden/Separatoren-Anordnung weist eine Schichtstruktur mit einer Abfolge von Kathodenschichten und Anodenschichten auf, wobei gegenüberliegende Kathoden- und Anodenschichten jeweils durch eine, insbesondere porös ausgebildete Separatorschicht voneinander getrennt sind.

Derart aufgebaute elektrische Energiespeicherzellen können z. B. für den Aufbau einer Traktionsbatterie zum Einsatz kommen, die in einem Hybridfahrzeug oder Elektrofahrzeug verbaut ist. Hybrid- oder Elektrofahrzeuge weisen eine elektrische Maschine als Antriebsmaschine auf, die aus einer Traktionsbatterie mit elektrischer Energie versorgt wird. Bei einem Hybridfahrzeug wird neben der elektrischen Maschine ein weiteres Aggregat für den Antrieb eingesetzt, in der Regel ein Verbrennungsmotor. Wohingegen ein Elektrofahrzeug ausschließlich durch eine elektrische Maschine angetrieben wird. Die zum Einsatz kommenden elektrischen Maschinen sind in der Regel als Innenläufermaschinen ausgelegt, bei denen ein drehbar gelagerter Rotor von einem ortsfesten Stator umschlossen ist. Als Antriebsmaschinen können Synchronmaschinen, insbesondere Hybrid-Synchronmaschinen zum Einsatz kommen

Bei einer Traktionsbatterie handelt es sich um einen elektrischen Hochvoltspeicher, der ein Spannungsniveau von 250 bis 420 Volt aufweisen kann. Um dieses Spannungsniveau zu erreichen, ist eine Traktionsbatterie aus einer großen Anzahl von in Reihe geschalteter Energiespeicherzellen aufgebaut. Dabei sind die Energiespeicherzellen üblicherweise zu kleineren Gruppen, den sogenannten Energiespeichermodulen zusammengefasst bzw. verschaltet, wobei die Energiespeichermodule zum Ausbilden der Traktionsbatterie untereinander in Reihe geschaltet sind. Im Automobilbereich werden für den Aufbau einer Traktionsbatterie unter anderem Lithium-Ionen-Speicherzellen eingesetzt.

Es sind mehrere Verfahren bekannt, mit denen sich Elektroden/Separatoren-Anordnungen herstellen lassen, die eine Schichtstruktur aufweisen, bei der die gegenüberliegenden Kathoden- und Anodenschichten jeweils durch eine Separatorschicht voneinander getrennt sind. Insbesondere sind solche Verfahren für Elektroden/Separatoren-Anordnungen bekannt, die bei Lithium-Ionen Speicherzellen verwendet werden. Bei dreien dieser Herstellungsverfahren sind die Materialien, aus denen die Elektroden/Separatoren-Anordnung aufgebaut ist, nämlich das Kathodenmaterial, das Anodenmaterial und das Separatormaterial als Rollenware bevorratet. Bei dem Eingangsmaterial für den Herstellungsprozess handelt es sich somit um Rollenware; die für die Herstellung der Elektroden/Separatoren-Anordnung benötigten Materialen werden der Verarbeitung als Rollenware zugeführt.

Ist die Energiespeicherzelle als eine Lithium-Ionen-Speicherzelle ausgeführt, so handelt es sich bei der Kathode, d. h. der positiven Elektrode, in der Regel um eine zusammengesetzte Elektrode, eine sogenannte Komposit-Elektrode. Diese Komposit-Elektrode besteht aus dem eigentlichen Aktivmaterial, einem elektrischen Leitadditiv, hierbei kann es sich beispielsweise um Leitruß handeln, und einem Elektrodenbinder, beispielsweise Polyvinylidenfluorid (PVDF), handeln, und ist auf einer Aluminiumfolie, der sogenannten Kollektorfolie in Form einer Schicht aufgebracht. Bei der Anode, d.h. der negativen Elektrode handelt es sich in der Regel ebenfalls um eine zusammengesetzte Komposit-Elektrode. In diesem Fall besteht die Komposit-Elektrode ebenfalls aus dem eigentlichen Aktivmaterial, beispielsweise Graphit, einem elektrischen Leitadditiv, wie beispielsweise Leitruß, und einem Elektrodenbinder, hierbei kann es sich beispielsweise um Carboxymethyl Cellulose (CMC) oder um Styrene-Butadiene Rubber (SBR) handeln, wobei diese Komposit-Elektrode in Form einer Schicht auf einer als Kollektorfolie agierenden Kupferfolie aufgebracht ist. Die beschichtete Aluminiumfolie entspruicht dem vorstehend erwähnten Kathodenmaterial. Die beschichtete Kupferfolie entspricht dem vorstehend erwähnten Anodenmaterial. Bei dem Separatormaterial handelt es sich für gewöhnlich um eine polymere Folie, die einen für den Betrieb der Energiespeicherzelle erforderlichen Ionendurchgang ermöglicht, also entsprechend porös ausgebildet ist.

Bei einem ersten Herstellungsverfahren, dem sogenannten Stapelverfahren, werden das jeweils als Rollenware bevorratete Separatormaterial, Anodenmaterial und Kathodenmaterial von der jeweiligen Rolle abgewickelt, entsprechend den geometrischen Vorgaben der Elektroden/Separatoren-Anordnung zugeschnitten und dann als vereinzelte Kathodenschichten, Anodenschichten und Separatorschichten bereitgestellt und in einen Stapelbehälter gelegt, wobei beim Einlegen der einzelnen Schichten in den Stapelbehälter eine bestimmte Reihenfolge eingehalten wird, so dass gegenüberliegende Kathoden- und Anodenschichten jeweils durch eine Separatorschicht getrennt sind. Insgesamt entsteht so eine lose Schichtstruktur, ein sogenannter Stapel (im Englischen: stack oder stacking).

Bei einem zweiten Herstellungsverfahren, dem sogenannten Flachwickelverfahren, werden insgesamt vier Rollen Elektrodenmaterial bereitgestellt, eine Rolle mit Kathodenmaterial, eine Rolle mit Anodenmaterial und zwei Rollen mit Separatormaterial. Das von den vier Rollen abgewickelte Elektrodenmaterial wird beispielsweise über eine Umlenkrolle, an der die vier eigenständigen Elektrodenmaterialien zusammengeführt bzw. zusammengelegt bzw. vereinigt werden, einem sich drehenden Aufnahmekörper zugeführt, auf dem diese dann aufgewickelt werden. Die vier Rollen sind dabei untereinander beispielsweise derart angeordnet, dass sich für die vier zusammengeführten Elektrodenmaterialien folgende Schichtfolge ergibt: Kathodenmaterial, Separatormaterial, Anodenmaterial, Separatormaterial. Sind auf den Aufnahmekörper eine vorgegebene Anzahl von Schichten des zusammengeführten Elektrodenmaterials aufgewickelt, dann wird das aufgewickelte Elektrodenmaterial von dem als Rollenware weiterhin bereitgestellten Elektrodenmaterial durch Abschneiden getrennt und anschließend noch in Form gebracht. Insgesamt entsteht bei diesem losen Wickeln der positiven und negativen Elektroden eine gewickelte Schichtstruktur, ein sogenannter Zellwickel (im Englischen: jelly/roll, abgekürzt: J/R).

Bei einem dritten Herstellungsverfahren, dem sogenannten Z-Faltungsverfahren sind ein Anodenmaterial, ein Kathodenmaterial und ein Separatormaterial als Rollenmaterial bevorratet. Die drei Elektrodenmaterialeien werden abgewickelt und beispielsweise über ein Rollenpaar, dem sie zugeführt werden, miteinander verbunden, wobei das Anodenmaterial und das Kathodenmaterial durch das zwischen beiden liegende Separatormaterial voneinander getrennt sind. Dabei sind sowohl das Anodenmaterial als auch das Kathodenmaterial lediglich auf der dem Separatormaterial zugewandten Seite mit elektrochemisch aktivem Material beschichtet. Die so miteinander verbundenen Elektrodenmaterialien werden über Umlenkrollen zu einer z-gefalteten Schichtstruktur angeordnet, wobei die Umlenkrollen entsprechend der Abmessungen der zu fertigenden Elektroden/Separatoren-Anordnung voneinander beabstandet sind.

Neben den vorgenannten drei Herstellungsverfahren ist ein weiteres, viertes Herstellungsverfahren bekannt, das sogenannte Z-Faltungsverfahren mit vereinzelten Elektroden. Bei diesem Herstellungsverfahren wird lediglich das Separatormaterial als Rollenware bevorratet. In das abgewickelte Separatormaterial werden von der einen Seite zugeschnitte Anodenmaterialplatten und von der anderen Seite ebenfalls zugeschnitte Kathodenmaterialplatten eingeschoben, so dass auch hier eine Z-gefaltete Schichtstruktur entsteht.

Sowohl beim ersten Herstellungsverfahren, dem Stapelverfahren, als auch beim dritten Herstellungsverfahren, dem Z-Faltungsverfahren, als auch beim vierten Herstellungsverfahren, dem Z-Faltungsverfahren mit vereinzelten Elektroden, werden die Elektroden weder gebogen noch geknickt.

Sämtlichen vier vorstehend beschriebenen Herstellungsverfahren ist gemein, dass die einzelnen Elektroden- bzw. Separatorenschichten bzw. -lagen nicht fest miteinander verbunden sind. Dies führt dazu, dass sich sowohl die einzelnen Elektrodenschichten, d.h. die Anodenschichten und die Kathodenschichten, als auch die einzelnen Separatorschichten bewegen bzw. verschieben lassen (z. B. bei mechanischem Stress). Dadurch kann es bei der weiteren Verarbeitung bzw. Bearbeitung der Elektroden/Separatoren-Anordnungen zu Fehlern in der Elektrodenpositionierung kommen, was dazu führen kann, dass die Kathode nicht mehr umlaufend in der Fläche der Anode liegt, was wiederum zu einer Lithium-Plattierung führen kann, die innere Feinschlüssen in der Energiespeicherzelle verursachen kann. Entsprechende Energiespeicherzellen sind als Ausschuss auszusortieren.

Insbesondere bei Elektroden/Separatoren-Anordnungen, die mittels des Stapelverfahrens (erstes Herstellungsverfahren) hergestellt sind, kann es noch zu folgendem Problem kommen: bei der weiteren Verarbeitung bzw. Bearbeitung kann sich die Elektroden/Separatoren-Anordnung auffächern. Dadurch kann es beim Einbringen der Elektroden/Separatoren-Anordnung in ein aus Metall bestehendes festes Gehäuse, solch ein Gehäuse wird auch alsHardcase bezeichnet, zu einer Beschädigung einzelner Anodenschichten, Kathodenschichten bzw. Separatorschichten kommen. Aufgrund dieser Beschädigungen können bei einer noch vorzunehmenden Formation der Elektroden/Separatoren-Anordnung sicherheitskritische innere Feinschlüsse entstehen. Dies ist auch ein Grund dafür, dass derart hergestellte Elektroden/Separatoren-Anordnungen, die sogenannte Stackvariante, üblicherweise in "weichen", aus Aluminium-Verbundfolie bestehenden Gehäusen untergebracht sind. Solche Gehäuse werden auch als Pouch oder Softpack bezeichnet).

WO 2012/120443 A1 betrifft ein Verfahren zum zumindest teilumfänglichen Herstellen einer elektrischen Energiespeicherzelle gemäß dem Oberbegriff des Anspruchs 1. Gemäß WO 2012/120443 A1 kann ein Entlastungskörper (stress relief body) 401 durch Spritzgießen angeformt oder durch eine mit Klebstoff versehene Kunststofffolie angeklebt werden, so dass der Entlastungskörper an Ort und Stelle verbleibt. Dadurch kann eine Leckage der Zellenabdichtung bei einem Pouch-Gehäuse während der Montage vermieden werden.

Die Dokumente DE 10 2011 084 692 A1 und DE 10 2008 061 011 A1 betreffen Energiespeicher, bei denen eine Klebstoffschicht zum Befestigen von Elementen verwendet wird.

GB 2 056 401 A offenbart eine Verpackungsmaschine und ein Verpackungsverfahren. Der zu verpackende Körper wird dabei durch Einwickeln in eine Stretch-Folie umhüllt, indem der Körper relativ zu der Folie um zwei Achsen gedreht wird, um Spiralwindungen der Folie um den Körper herum zu bilden.

Es ist daher eine Aufgabe der vorliegenden Erfindung, bestehende Verfahren und Vorrichtungen zum zumindest teilumfänglichen Herstellen einer elektrischen Energiespeicherzelle zu verbessern. Zum einen soll es möglich sein, dass Elektroden/Separatoren-Anordnungen, die eine Schichtstruktur mit einer Abfolge von Kathodenschichten und Anodenschichten und gegenüberliegende Schichten trennende Separatorschichten aufweisen, in beliebig ausgebildeten Speicherzellengehäusen untergebracht werden können, und zwar unabhängig von der konkreten Ausgestaltung der Schichtstruktur bzw. dem zu deren Herstellung angewandten Herstellungsverfahren. Damit geht einher, dass es möglich sein soll, Energiespeicherzellen herstellen zu können, die eine hohe Speicherkapazität aufweisen, gleichzeitig aber einfach in der Handhabe sind, d.h. sich auf einfache Art und Weise zu einem Energiespeichermodul bzw. einer Traktionsbatterie verarbeiten bzw. anordnen lassen, und die Elektroden/Separatoren-Anordnung ausreichend vor äußeren mechanischen Einwirkungen schützen. Diese Anforderung wird insbesondere von einer Energiespeicherzelle erfüllt, bei der eine mittels des Stapelverfahrens hergestellte Elektroden/Separatoren-Anordnung (Stack) in einem prismatisch ausgebildeten festen Metallgehäuse untergebracht ist, das vorzugsweise eine Wandstärke von mehr als 0,3 oder 0,5 Millimeter aufweist (derartige Metallgehäuse werden auch als Hardcase bezeichnet). Zum anderen soll es möglich sein, Energiespeicherzellen auf einfache Art und Weise kostengünstig herzustellen.

Die wesentliche Merkmale der Erfindung sind explizit in Wortlaut der unabhängigen Ansprüchen 1, 11, 12 und 13 erwähnt. Andere Merkmale der Erfindung sind in Wortlaut der abhängigen Ansprüchen 2-10 explizit erwähnt.

Diese Aufgabe wird durch ein Verfahren der eingangs genannten Art gelöst, bei dem folgende Schritte ablaufen:
- Bereitstellen der Elektroden/Separatoren-Anordnung,
- Bereitstellen einer selbsthaftend ausgebildeten Kunststofffolie,
- Aufbringen der selbsthaftenden Kunststofffolie auf zumindest einen Teilbereich der Anordnungsoberfläche.

Die Aufgabe wird ferner durch eine Vorrichtung der eingangs genannten Art gelöst, die folgende Mittel aufweist: eine Anordnungsbereitstellungseinheit, die dazu ausgebildet ist, die Elektroden/Separatoren-Anordnung bereitzustellen, eine Folienbereitstellungseinheit, die dazu ausgebildet ist, eine selbsthaftend ausgebildete Kunststofffolie bereitzustellen, und eine Aufbringungseinheit, die dazu ausgebildet ist, die selbsthaftende Kunststofffolie auf zumindest einen Teilbereich der Anordnungsoberfläche aufzubringen.

Mit Hilfe der auf zumindest einem Teilbereich der Anordnungsoberfläche aufgebrachten Kunststofffolie wird die ursprüngliche Position der Kathodenschichten, der Anodenschichten und der Separatorschichten zueinander insbesondere langfristig fixiert, d.h. es wird verhindert, dass sich einzelne Schichten untereinander bewegen bzw. verschieben. Insgesamt bleibt somit die ursprüngliche Position der Elektroden und des Separators innerhalb einer Elektroden/Separatoren-Anordnung fixiert. Insbesondere bei Elektroden/Separatoren-Anordnungen, die mittels des Stapelverfahrens hergestellt sind, ist somit sichergestellt, dass sich diese bei deren weiteren Verarbeitung bzw. Bearbeitung nicht auffächern können. Somit ist es möglich, dass eine mittels des Stapelverfahrens hergestellte Elektroden/Separatoren-Anordnung in ein prismatisch ausgebildetes festes Metallgehäuse (Hardcase) eingebracht bzw. untergebracht werden kann, und somit eine Energiespeicherzelle hergestellt werden kann, die eine hohe Speicherkapazität und optimale Volumenausnutzung der Elektroden in dem vorstehend bezeichneten Metallgehäuse bei gleichzeitig einfacher Handhabe aufweist. Dadurch dass die Kunststofffolie selbsthaftend ausgebildet ist, kann auf den Einsatz von zusätzlichem Klebstoff verzichtet werden. D.h. anstelle einer Kunststofffolie mit einer darauf aufgebrachten Klebeschicht, wie dies beispielweise von Klebebändern her bekannt ist, die für Verpackungszwecke eingesetzt werden, kann eine Kunststofffolie ohne solch eine Klebeschicht verwendet werden. Dies wirkt sich mehrfach positiv aus. Zum einen können dadurch nicht unerhebliche Materialkosten eingespart werden, weil ggf. zu verwendender Klebstoff verhältnismäßig teuer ist. Zum anderen kann dadurch die Fertigungszeit einer Energiespeicherzelle verringert werden, da ein ansonsten für das Aufbringen des Klebstoffes erforderlicher Fertigungsschritt entfallen kann. Hinzu kommt, dass die Energiespeicherzelle keinen Klebstoff, also ein Material weniger aufweist, was dazu führt, dass ggf. mit dem Klebstoff einhergehende Einschränkungen für die Auswahl weiterer in der Energiespeicherzelle verbauter Materialen entfallen. Da zudem die Klebeschicht eine Dicke von beispielsweise 30 bis 50 µm aufweist, wie dies von den vorgenannten Klebebändern her bekannt ist, kann mit einer selbsthaftend ausgebildeten Kunststofffolie ferner die Energiedichte der Energiespeicherzelle gesteigert werden.

Die obengenannte Aufgabe ist daher vollständig gelöst.

Vorteilhafterweise ist die selbsthaftende Kunststofffolie als Adhäsionsfolie ausgeführt. Hierbei handelt es sich um eine weiche Kunststofffolie, die zudem sehr glatt ausgeführt ist, und die ohne zusätzlichen Klebstoff auf glatten Oberflächen haftet, im Fall einer in eine Energiespeicherzelle einzubringenden Elektroden/Separatoren-Anordnung auf den Elektroden bzw. Separatorflächen. Diese Haftung wird durch sogenannte Van-der-Waals-Bindungen bewirkt, die sich zwischen der Grenzschicht der Kunststofffolie und der Grenzschicht des Materials, an der die Kunststofffolie anliegt, ausbilden. Somit ist ein Fixieren der einzelnen Schichten der Elektroden/Separatoren-Anordnung ohne zusätzlichen Klebstoff, beispielsweise in Form einer vorstehend beschriebenen Klebeschicht, möglich.

Mit dem erfindungsgemäßen Verfahren lassen sich idealerweise für unterschiedlich hergestellte Elektroden/Separatoren-Anordnungen die einzelnen Schichten fixieren, also unter anderem für eine Elektroden/Separatoren-Anordnung, die eine lose Schichtstruktur oder eine Z-gefaltete Schichtstruktur oder eine gewickelte Schichtstruktur aufweist. Somit ist es möglich, dass eine eine Schichtstruktur aufweisende Elektroden/Separatoren-Anordnung in einem beliebig ausgebildeten Speicherzellengehäuse ein- bzw. untergebracht werden kann. Insbesondere kann eine mittels des Stapelverfahrens hergestellte Elektroden/Separatoren-Anordnung in ein prismatisch ausgebildetes festes Metallgehäuse eingebracht bzw. untergebracht werden. In dieser Ausgestaltung kann eine Energiespeicherzelle hergestellt werden, die eine hohe Speicherkapazität aufweist, bei gleichzeitig einfacher Handhabe.

Neben den vorstehend genannten Elektroden/Separatoren-Anordnungen sind noch weitere, alternativ ausgestaltete bzw. aufgebaute Elektroden/Separatoren-Anordnungen bekannt, auf die das erfindungsgemäße Verfahren angewandt werden kann bzw. die mittels der erfindungsgemäßen Vorrichtung bearbeitet werden können, beispielsweise sogenannte teillaminierte Elektroden/Separatoren-Anordnungen. Generell handelt es sich hierbei um eine Elektroden/Separatoren-Anordnung, bei der ein Teil der Kathodenschichten, der Anodenschichten und der Separatorenschichten, aus denen die Elektroden/Separatoren-Anordnung aufgebaut ist, zu einem Schichtverbund miteinander verklebt sind, D. h. eine teillaminierte Elektroden/Separatoren-Anordnung weist zumindest einen solchen Schichtverbund auf oder besteht aus mehreren solcher Schichtverbunde. Solch ein Schichtverbund, der auch als Bi-Zelle bezeichnet wird, weist eine Anzahl von Anoden- und Kathodenschichten und diese trennende Separatorschichten auf, beispielsweise in einer Abfolge negative Elektrode, Separator, positive Elektrode, Separator, negative Elektrode, oder in einer Abfolge positive Elektrode, Separator, negative Elektrode, Separator, positive Elektrode, wobei die Anzahl der miteinander verbundenen Schichten auch größer sein kann. Bei einer teillaminierten Elektroden/Separatoren-Anordnung sind einer mehrere Ausgestaltungen senkbar. In einer ersten Ausgestaltung können mehrere solcher Schichtverbunde aufeinander gestapelt sein. Alternativ können solche Schichtverbunde in abwechselnder Polarität auf ein Separatormaterial aufgebracht werden und die teillaminierte Elektroden/Separatoren-Anordnung dann durch wickeln bzw. falten ausgebildet werden.

Vorteilhafterweise erfolgt das Aufbringen durch Aufwickeln der selbsthaftenden Kunststofffolie auf die Elektroden/Separatoren-Anordnung. Mit dieser Maßnahme kann die Kunststofffolie auf einfache Art und Weise auf die Elektroden/Separatoren-Anordnung aufgebracht werden. Die Kunststofffolie kann dabei als Rollenware bevorratet bzw. bereitgestellt werden. Durch Drehen der Elektroden/Separatoren-Anordnung kann dann die benötigte Menge an Kunststofffolie von der Rolle abgewickelt und auf die Elektroden/Separatoren-Anordnung aufgewickelt werden. Zudem ist ein reproduzierbares und definiertes Aufbringen der Kunststofffolie auf die Elektroden/Separatoren-Anordnung sichergestellt, was eine zuverlässige Herstellung der Energiespeicherzellen ermöglicht und eine hervorragende Verpressung der Schichtstruktur der Elektroden/Separatoren-Anordnung sicherstellt.

Vorteilhafterweise ist zumindest eine Lage der selbsthaftenden Kunststofffolie auf der Elektroden/Separatoren-Anordnung aufgewickelt. Diese Maßnahme stellt sicher, dass die einzelnen Schichten der Elektroden/Separatoren-Anordnung gleichmäßig, mit Blick auf die von der Umwickelung betroffene Anordnungsoberfläche, von allen Seiten mit der Kunststofffolie beaufschlagt und somit zuverlässig fixiert sind. Damit einher geht, dass die Elektroden/Separatoren-Anordnung mit Blick auf die von der Umwickelung betroffene Anordnungsoberfläche größtmöglich gegen äußere Einwirkungen geschützt ist. Vorzugsweise verhält es sich bei einer einlagig aufgebrachten Kunststoffolie nicht so, dass der Anfang der Kunststofffolie und das Ende der Kunststofffolie einen Stoß ausbilden. Vielmehr soll es so sein, dass es in einem, in Bezug auf die gesamte zu umwickelnde Anordnungsoberfläche, kleinen Bereich einen Überlapp zwischen dem Anfang der Kunststofffolie und dem Ende der Kunststofffolie, und somit in diesem Bereich eine untere und eine obere Kunststofffolie gibt.

Vorzugsweise sind zwei Lagen der selbsthaftenden Kunststofffolie auf der Elektroden/Separatoren-Anordnung aufgewickelt. Durch die zweite Umwickelung wird erreicht, dass die Kunststofffolie auf sich selbst haftet, wodurch eine verbesserte Verpressung und somit Fixierung der einzelnen Schichten erzielt wird.

In einem weiteren Schritt erfolgt das Abtrennen der auf der Anordnungsoberfläche aufgebrachten Kunststofffolie von der weiterhin bereitgestellten, nicht aufgebrachten Kunststofffolie. Somit ist es möglich, die Kunststofffolie als Rollenware bereitzustellen, wodurch sich das erfindungsgemäße Verfahren insgesamt sehr einfach darstellt. Vorzugsweise schließt sich der Schritt des Abtrennens an den Schritt des Aufbringens an, was insbesondere dann von Vorteil ist, wenn die Kunststofffolie auf die Elektroden/Separatoren-Anordnung aufgewickelt wird. Alternativ ist es aber auch denkbar, dass der Schritt des Abtrennens vor dem Schritt des Aufbringens erfolgt. Diese Schrittreihenfolge kann beispielsweise dann gewählt werden, wenn abgelängte, beispielsweise streifenförmige Kunststofffolienstücke auf die Elektroden/Separatoren-Anordnung aufgebracht werden.

In einem weiteren, sich an das Aufbringen der selbsthaftenden Kunststofffolie anschließenden Schritt erfolgt das Einbringen der Elektroden/Separatoren-Anordnung in das Speicherzellengehäuse. Der Schritt des Einbringens kann sich unmittelbar an den Schritt des Aufbringens anschließen, nämlich dann, wenn bereits abgelängte Kunststofffolienstücke auf die Elektroden/Separatoren-Anordnung aufgebracht werden. Der Schritt des Einbringens kann sich aber auch an den Schritt des Abtrennens anschließen, nämlich dann, wenn die als Rollenware bereitgestellte bzw. bevorratete Kunststofffolie (Endlosmaterial) auf die Elektroden/Separatoren-Anordnung aufgewickelt wird.

In einer weiteren Ausgestaltung der Erfindung ist die Kunststofffolie elastisch ausgeführt. Die elastische und somit dehnbare Kunststofffolie ermöglicht eine besonders gute Krafteinleitung und somit Verpressung und demzufolge Fixierung der einzelnen Schichten. Vorzugsweise kann eine Dehnfolie zum Einsatz kommen, wie sie für das Verpacken von Lebensmitteln verwendet wird. Solche als "Frischhaltefolie" bezeichneten Folien sind kostengünstig zu erwerben, da es sich hierbei um ein in großen Mengen hergestelltes Produkt handelt. Vorteilhafterweise ist die Dehnfolie reißfest ausgeführt, was zu einer hohen Prozesssicherheit führt, weswegen die Energiespeicherzellen mit einer hohen Zuverlässigkeit hergestellt werden können. Alternativ kann eine Folie verwendet werden, die ansonsten im Bereich der Verpackung bzw. Sicherung von zu transportierenden Gegenständen zum Einsatz kommt. Solche Folien sind unter dem Begriff "Stretchfolie" bekannt.

In einer weiteren Ausgestaltung der Erfindung besteht die Kunststofffolie aus einem Polyolefin. Diese Polymere zeichnen sich dadurch aus, dass sie über die ausreichende elektrochemische bzw. chemische Stabilität verfügen, die hinsichtlich des in der Energiespeicherzelle befindlichen Elektrolyts erforderlich ist. Vorzugsweise besteht die Kunststofffolie aus Polyethylen, mit dem sich hinsichtlich der Fixierung der einzelnen Schichten der Elektroden/Separatoren-Anordnung besonders gute Ergebnisse erzielen lassen. Zudem sind Kunststofffolien aus Polyethylen besonders kostengünstig, weil es sich hier um Massenprodukte handelt. Auch Polyesterfolien, beispielsweise Folien aus Polyethylenterephthalat (PET) können verwendet werden.

Es hat sich gezeigt, dass mit einer Kunststofffolie, die eine Dicke von 5 bis 50 µm aufweist, gute Ergebnisse erzielt werden. Vorzugsweise wird eine Kunststofffolie verwendet, die eine Dicke von 10 bis 30 µm aufweist. Besonders vorzugsweise kommt eine Kunststofffolie zum Einsatz, die eine Dicke von 12 bis 18 µm aufweist, unter Umständen gar von 12 bis 15 µm. Die vorstehend bezeichneten Kunststofffolien zeichnen sich dadurch aus, dass bei deren Verwendung weder die Masse noch das Volumen der umwickelten Efektroden/Separatoren-Anordnung und somit auch der Energiespeicherzelle in nennenswerten Umfang erhöht wird.

In einer bevorzugten Ausgestaltung der Erfindung ist die Kunststofffolie zumindest in einem Teilbereich perforiert ausgeführt. Vorzugsweise kommt eine vollständig perforierte Kunststofffolie zum Einsatz, eine Kunststofffolie also, die nicht nur in einem Teilbereich, sondern vollumfänglich perforiert ist. Die perforierte, insbesondere makroperforierte Kunststofffolie weist zumindest in einem Teilbereich eine Durchlochung auf, wobei die einzelnen Löcher regelmäßig oder unregelmäßig angeordnet sein können. Die einzelnen Löcher können mittels eines Lochungsvorgangs oder mittels eines Stanzvorgangs in die Kunststofffolie eingebracht sein. Eine zumindest in einem Teilbereich perforierte Kunststofffolie hat den Vorteil, dass der flüssige Elektrolyt noch besser die Elektroden und den Separator benetzen kann. Ferner wird durch den Einsatz einer solchen Folie die spezifische Energie erhöht. Alternativ kann eine massive Kunststofffolie verwendet werden, eine Kunststofffolie also, die keine Durchlochung aufweist.

In einer weiteren vorteilhaften Ausgestaltung der Erfindung kommt eine Kunststofffolie zum Einsatz, die zudem gereckt ist. Eine solche Folie zeichnet sich durch eine höhere Stabilität aus.

Bei dem Speicherzellengehäuse, in das die Elektroden/Separatoren-Anordnung einzubringen ist, handelt es sich vorzugsweise um ein aus Metall ausgeführtes Gehäuse oder um ein aus einer Verbundfolie, insbesondere Aluminium-Verbundfolie ausgeführtes Gehäuse. Bei dem aus Metall ausgeführten Gehäuse soll es sich um ein hartes bzw. festes Gehäuse handeln, das vorzugsweise eine Wandstärke von mindestens 0,3 oder 0,5 Millimeter aufweist. Ein solches Gehäuse wird im technischen Sprachgebrauch auch als Hardcase bezeichnet. Bei dem aus einer Verbundfolie ausgeführten Gehäuse handelt es sich um ein Gehäuse in der Art einer Verpackung. Solche verpackungsartigen Speicherzellengehäuse werden auch als Pouch oder Softpack bezeichnet. Insbesondere dann, wenn es sich um ein vorstehend bezeichnetes, aus Metall ausgeführtes, festes Gehäuse handelt, kann eine Energiespeicherzelle hergestellt werden, die eine hohe Speicherkapazität hat und gleichzeitig einfach in der Handhabe ist. Es hat sich gezeigt, dass Energiespeicherzellen, die mit dem erfindungsgemäßen Verfahren bzw. unter Verwendung der erfindungsgemäßen Vorrichtung hergestellt sind, eine erhöhte Lebensdauer aufweisen. Dies ist auf die verbesserte Kontaktierung zurückzuführen, die sich aus dem (leichten) mechanischen Druck ergibt, den die Kunststofffolie auf die Elektroden/Separatoren-Anordnung, sprich das Ensemble der Elektroden mit Separator ausübt. Dies gilt insbesondere für als Lithium-Ionen Speicherzellen ausgeführte Energiespeicherzellen. Es ist nicht nur die Lebensdauer der einzelnen erfindungsgemäßen Energiespeicherzellen erhöht, sondern auch die Lebensdauer eines Energiespeichermoduls bzw. einer Traktionsbatterie, in dem bzw. in der solche Energiespeicherzellen verbaut sind.

Mit dem erfindungsgemäßen Verfahren bzw. der erfindungsgemäßen Vorrichtung ist es möglich, sämtliche in einer Energiespeicherzelle benötigten Elektroden und Separatoren in Form zu bringen, so dass diese mit den Terminals der Energiespeicherzelle verbunden und in das Speicherzellengehäuse eingebracht werden können.

Insbesondere dann, wenn mit dem erfindungsgemäßen Verfahren bzw. unter Verwendung der erfindungsgemäßen Vorrichtung eine mit dem Stapelverfahren oder eine mit dem Z-Faltungsverfahren oder eine mit dem Z-Faftungsverfahren mit vereinzelten Elektroden hergestellte Elektroden/Separatoren-Anordnung mit der selbsthaftend ausgebildeten Kunststofffolie umwickelt wird, und diese umwickelte Elektroden/Separatoren-Anordnung dann in ein metallisches Gehäuse eingebracht wird, das eine Wandstärke von mehr als 0,3 oder 0,5 Millimeter aufweist, lässt sich eine Energiespeicherzelle mit erhöhter Energiedichte und somit erhöhter Speicherkapazität und verbesserter Lebensdauer herstellen.

Ausführungsbeispiele der Erfindung sind in der Zeichnung dargestellt und werden in der nachfolgenden Beschreibung näher erläutert. Es zeigen:
- Fig. 1: anhand einer schematischen Darstellung den prinzipiellen Aufbau einer prismatischen Energiespeicherzelle,
- Fig. 2: anhand einer schematischen Darstellung eine eine Schichtstruktur aufweisende Elektroden/Separatoren-Anordnung,
- Fig. 3: anhand einer schematischen Darstellung einen Überblick über den Ablauf des erfindungsgemäßen Verfahrens bzw. einen Überblick über den Aufbau der erfindungsgemäßen Vorrichtung,
- Fig. 4: anhand einer schematischen Darstellung das Aufbringen einer selbsthaftend ausgebildeten Kunststofffolie auf eine Elektroden/Separatoren-Anordnung,
- Fig. 5: anhand von vier Teilfiguren verschiedentlich mit einer Kunststofffolie umwickelte Elektroden/Separatoren-Anordnungen,
- Fig. 6: anhand einer schematischen Darstellung das Einbringen einer mit einer Kunststofffolie versehenen Elektroden/Separatoren-Anordnung in ein Speicherzellengehäuse.

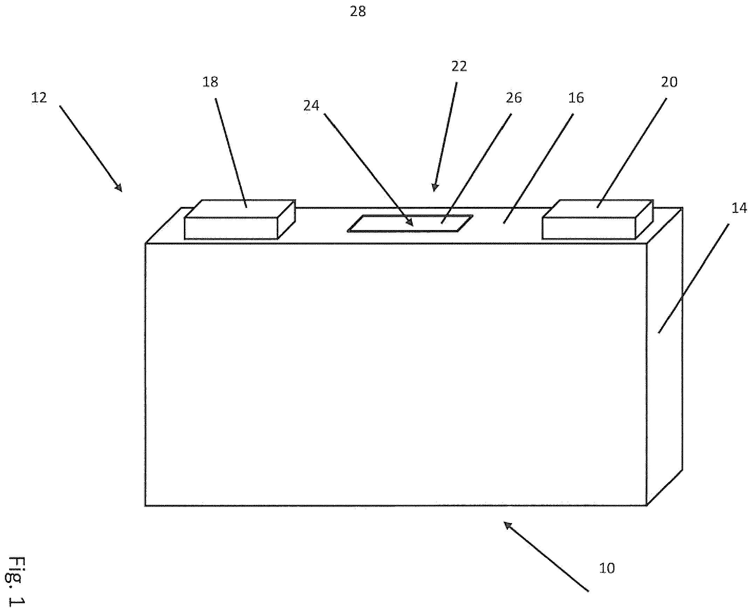

Fig. 1 zeigt anhand einer schematischen Darstellung den prinzipiellen Aufbau einer elektrischen Energiespeicherzelle 10, die auch als Batteriezelle bezeichnet werden kann. Wie der Darstellung in Fig. 1 zu entnehmen ist, handelt es sich um eine prismatisch ausgebildete Energiespeicherzelle. Die Energiespeicherzelle 10 weist ein Speicherzellengehäuse 12 auf, das eine Vielzahl von Gehäusewänden aufweist, von denen eine exemplarisch mit der Bezugsziffer 14 gekennzeichnet ist. Bei einer der Gehäusewände handelt es sich um den Deckel 16 der Energiespeicherzelle 10. Am Deckel 16 sind zwei Anschlüsse 18, 20 vorgesehen, wobei es sich bei dem Anschluss 18 um den positiven Anschluss und bei dem Anschluss 20 um den negativen Anschluss der Energiespeicherzelle 10 handeln soll. Ferner weist der Deckel 16 eine Gehäuseöffnung 22 mit einem Öffnungsbereich 24 auf. In dem Bereich der Gehäuseöffnung 22 ist ein Entlüftungselement 26 angeordnet, das die Gehäuseöffnung 22 gegenüber einer Umgebung 28 der Energiespeicherzelle 10 verschließt. Über das Entlüftungselement 26 können unter Druck stehende Gase aus dem Inneren der Energiespeicherzelle 10 entweichen, wodurch im Falle einer vorliegenden Fehlfunktion ein Explodieren der Energiespeicherzelle 10 vermieden werden kann.

Dass es sich bei der in Fig. 1 dargestellten Energiespeicherzelle um eine prismatische Energiespeicherzelle handelt, soll mit Blick auf die nachfolgenden Ausführungen keine einschränkende Wirkung haben. Selbstverständlich kann eine nach dem erfindungsgemäßen Verfahren bzw. mit der erfindungsgemäßen Vorrichtung hergestellte Elektroden/Separatoren-Anordnung auch in einem anders ausgestalteten Speicherzellengehäuse untergebracht sein, beispielsweise in einem aus einer Aluminium-Verbundfolie aufgebauten Gehäuse.

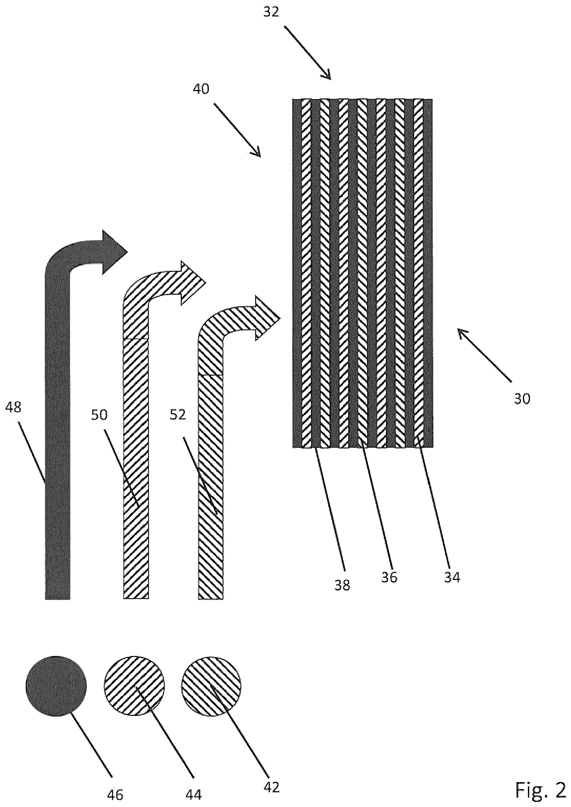

Mit dem erfindungsgemäßen Verfahren bzw. mit der erfindungsgemäßen Vorrichtung wird die Möglichkeit geschaffen, eine Elektroden/Separatoren-Anordnung, die eine Schichtstruktur aufweist, in einem beliebig ausgestalteten Speicherzellengehäuse unterbringen zu können. Nachfolgend wird unter Zuhilfenahme von Fig. 2 nochmals ausführlich auf den Aufbau der bereits mehrfach beschriebenen Schichtstruktur eingegangen.

Wie der Darstellung in Fig. 2 zu entnehmen ist, weist eine mit dem erfindungsgemäßen Verfahren bzw. mit der erfindungsgemäßen Vorrichtung hergestellte Elektroden/Separatoren-Anordnung 30 eine Schichtstruktur 32 auf, die wiederum eine Abfolge von Anodenschichten und Kathodenschichten aufweist, wobei eine der Anodenschichten mit der Bezugsziffer 34 und eine der Kathodenschichten mit der Bezugsziffer 36 gekennzeichnet ist. Wie der Darstellung ferner zu entnehmen ist, sind die Anodenschichten 34 und Kathodenschichten 36 durch Separatorschichten voneinander getrennt, von denen eine mit der Bezugsziffer 38 gekennzeichnet ist. Die Elektroden/Separatoren-Anordnung 30 weist eine Anordnungsoberfläche 40 auf, auf die eine selbsthaftende Kunststofffolie aufgebracht werden soll. Die Materialien, aus denen die Elektroden/Separatoren-Anordnung 30 aufgebaut ist, sind als Rollenware bevorratet bzw. bereitgestellt, was in Fig. 2 durch eine Rolle 42 für das Kathodenmaterial, eine Rolle 44 für das Anodenmaterial und eine Rolle 46 für das Separatormaterial angedeutet ist. Das Anodenmaterial, das Kathodenmaterial und das Separatormaterial werden mit Hilfe eines der eingangs beschriebenen Herstellungsverfahren, nämlich dem Stapelverfahren oder dem Flachwickelverfahren oder dem Z-Faltungsverfahren oder dem Z-Faltungsverfahren mit vereinzelten Elektroden zu der Elektroden/Separatoren-Anordnung 30 verarbeitet, was durch Pfeile 48, 50, 52 angedeutet ist.

Auch wenn die Darstellung in Fig. 2 vermuten lässt, dass die gezeigte und somit in ein Speicherzellengehäuse einzubringende Elektroden/Separatoren-Anordnung 30 aufgrund der gezeigten Anordnung der Anodenschichten 34, der Kathodenschichten 36 und der Separatorschichten 38 mittels des Stapelverfahrens hergestellt worden ist und es sich somit um eine lose Schichtstruktur handelt, soll dies keine einschränkende Wirkung haben. Die im Zusammenhang mit Fig. 2 gemachten Ausführungen gelten in entsprechender Weise auch für Elektroden/Separatoren-Anordnungen, die mittels eines der anderen Herstellungsverfahren hergestellt worden sind, also auch für eine Z-gefaltete Schichtstruktur oder eine gewickelte Schichtstruktur. Aber auch für die eingangs beschriebenen teillaminierten Elektroden/Separatoren-Anordnungen.

Wie der Darstellung in Fig. 2 zu entnehmen ist, weist das in das Speicherzellengehäuse einzubringende Elektrodenmaterial 30 eine Schichtstruktur mit einer Vielzahl von Schichtfolgen auf, wobei die Schichtfolgen aus Anodenschichten 34, Kathodenschichten 36 und dazwischen liegenden Separatorschichten 38 aufgebaut ist.

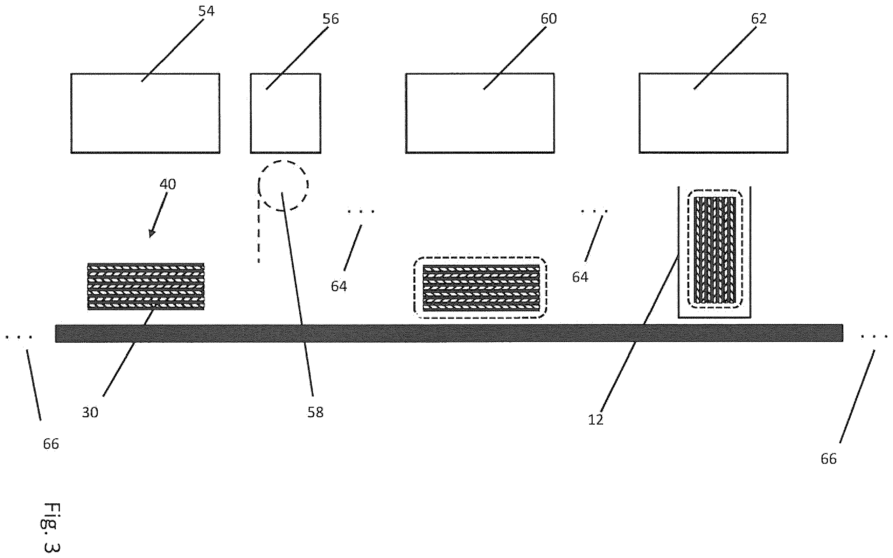

Fig. 3 gibt einen Überblick über den Ablauf des erfindungsgemäßen Verfahrens bzw. über den Aufbau der erfindungsgemäßen Vorrichtung. In einem ersten Schritt wird mittels einer Anordnungsbereitstellungseinheit 54 eine Elektroden/Separatoren-Anordnung 30 bereitgestellt. In einem weiteren Schritt wird mittels einer Folienbereitstellungseinheit 56 eine selbsthaftend ausgebildete Kunststofffolie 58 bereitgestellt. In einem weiteren Schritt wird mittels einer Aufbringungseinheit 60 die selbsthaftende Kunststofffolie 58 auf zumindest einen Teilbereich der Anordnungsoberfläche aufgebracht. In einem weiteren nachgelagerten Schritt wird die mit der selbsthaftend ausgebildeten Kunststofffolie 58 umwickelte Elektroden/Separatoren-Anordnung 30 mittels einer Einbringungseinheit 62 in ein Speicherzellengehäuse 12 eingebracht. Unabhängig von der in Fig. 3 gewählten Darstellung des Speicherzellengehäuses kann es sich hierbei um ein aus Metall ausgeführtes Gehäuse handeln, das vorzugsweise eine Wandstärke von mehr als 0,3 oder 0,5 Millimeter aufweist. Alternativ kann es sich um ein aus einer Verbundfolie, insbesondere einer Aluminium-Verbundfolie aufgebautes Gehäuse handeln.

Mittels einer entsprechend hierfür eingerichteten, in Fig. 3 jedoch aus Gründen der Übersichtlichkeit nicht dargestellten Abtrennungseinheit wird in einem weiteren Schritt die auf die Anordnungsoberfläche 40 aufzubringende oder aufgebrachte Kunststofffolie 58 von der weiterhin bereitgestellten, nicht aufgebrachten Kunststofffolie 58 abgetrennt. Wie bereits eingangs ausgeführt, kann sich der Schritt des Abtrennens an den Schritt des Aufbringens anschließen oder vor dem Schritt des Aufbringens erfolgen, was in Fig. 3 durch Punkte 64 angedeutet ist. Demzufolge kann sich das Einbringen der mit der selbsthaftend ausgebildeten Kunststofffolie versehenen Elektroden/Separatoren-Anordnung in das Speicherzellengehäuse entweder unmittelbar oder nicht unmittelbar an das Aufbringen der Kunststofffolie auf die Elektroden/Separatoren-Anordnung anschließen.

Mittels weiterer Punkte 66 ist in Fig. 3 zudem angedeutet, dass es sich bei dem erfindungsgemäßen Verfahren bzw. bei den zu diesem Verfahren gehörenden Schritten um einen Teilumfang des Gesamtherstellungsverfahrens bzw. der Schritte insgesamt handelt, mit dem bzw. mit denen eine Energiespeicherzelle vollumfänglich hergestellt wird. Mit anderen Worten: das erfindungsgemäße Verfahren betrifft einen Teilumfang der Herstellung einer Energiespeicherzelle.

An dieser Stelle sei noch erwähnt, dass die in Fig. 3 gewählte Darstellung, gemäß der es sich um eigenständige Bearbeitungseinheiten handelt, keine einschränkende Wirkung haben soll. Selbstverständlich können die in Fig.2 vereinzelt dargestellten Bearbeitungseinheiten zu einer beliebigen Anzahl von zusammengefasten Bearbeitungseinheiten bzw. zu einer einzigen Gesamtbearbeitungseinheit zusammengefasst sein.

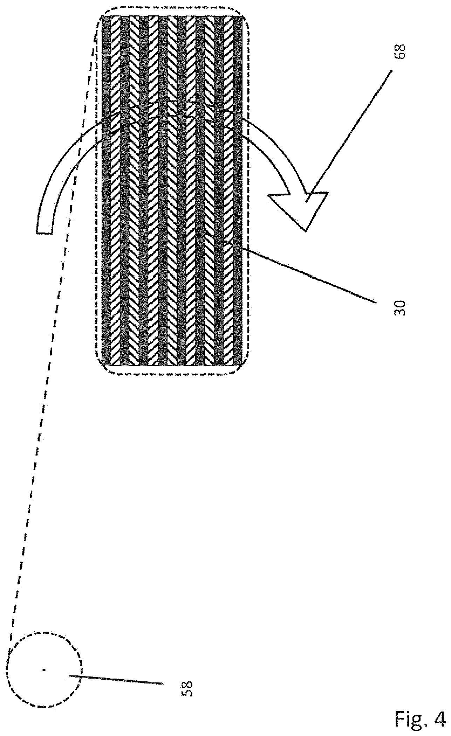

In Fig. 4 ist schematisch das Aufbringen einer selbsthaftend ausgebildeten Kunststofffolie 58 auf eine Elektroden/Separatoren-Anordnung 30 gezeigt. In Fig. 4 ist eine mögliche Form des Aufbringens gezeigt, nämlich das Aufwickeln der selbsthaftenden Kunststofffolie 58 auf die Elektroden/Separatoren-Anordnung 30. Hierzu kann die Elektroden/Separatoren-Anordnung 30 mit Hilfe einer in Fig. 4 nicht dargestellten Dreheinrichtung gedreht werden, was durch einen Pfeil 68 angedeutet ist. Durch die Drehbewegung der Elektroden/Separatoren-Anordnung 30 wird die als Rollenware bevorratete bzw. bereitgestellte Kunststofffolie 58 von der Rolle ab- und auf die Elektroden/Separatoren-Anordnung 30 aufgewickelt.

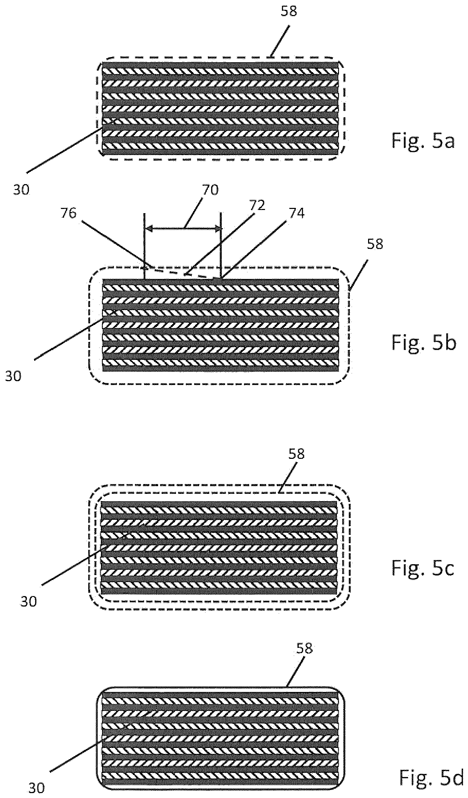

Fig. 5 besteht aus vier Teilfiguren, die verschiedentlich mit Kunststofffolie 58 umwickelte Elektroden/Separatoren-Anordnungen 30 zeigen. Teilfigur 5a zeigt eine Elektroden/Separatoren-Anordnung 30, auf der eine Lage Kunststofffolie 58 aufgebracht ist. Dabei kann, wie in Teilfigur 5b angedeutet, vorgesehen sein, dass in einem vorzugsweise kleinen Bereich 70 ein Überlapp 72 zwischen einem Anfang 74 und einem Ende 76 der aufgebrachten Kunststofffolie 58 existiert. Teilfigur 5c zeigt eine Elektroden/Separatoren-Anordnung 30, auf der zwei Lagen der Kunststofffolie 58 aufgebracht sind. Durch die strichlinierte Darstellung in den Teilfiguren 5a, 5b und 5c soll angedeutet sein, dass die Kunststofffolie 58 perforiert ausgeführt ist. Dagegen ist durch die in Teilfigur 5d gewählte durchgezogene Darstellung der Kunststofffolie 58 angedeutet, dass auch eine nicht perforierte Kunststofffolie verwendet werden kann. Selbstverständlich kann die in den beiden Teilfiguren 5b und 5c gezeigte Kunststofffolie auch nicht perforiert ausgeführt sein.

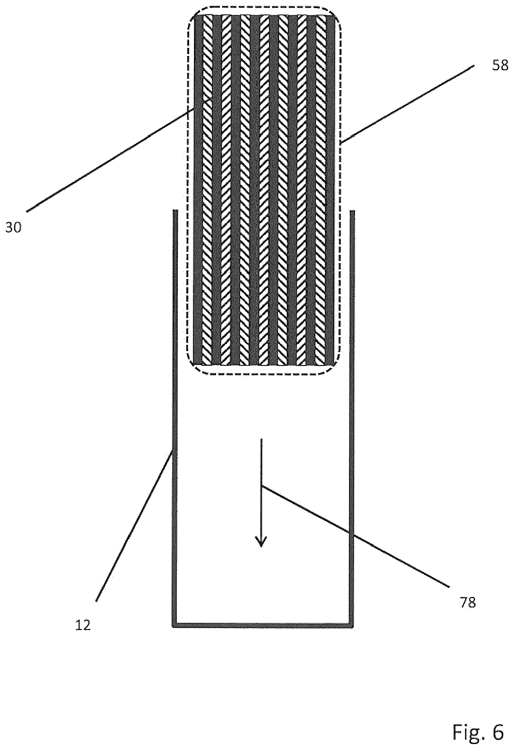

Fig. 6 zeigt nochmals das Einbringen der mit einer Kunststofffolie 58 versehenen Elektroden/Separatoren-Anordnung 30 in ein Speicherzellengehäuse 12, was durch einen Pfeil 78 angedeutet ist.

Wie bereits ausgeführt, kann die Kunststofffolie elastisch ausgeführt sein, aus einem Polyolefin, insbesondere aus Polyethylen, oder einem Polyester bestehen und eine Dicke von 5 bis 50 µm, vorzugsweise 10 bis 30 µm, besonders vorzugsweise 12 bis 18 µm aufweisen.

### Bezugszeichenliste

- 10: Energiespeicherzelle
- 12: Speicherzellengehäuse
- 14: Gehäusewand
- 16: Deckel
- 18: positiven Anschluss
- 20: negativen Anschluss
- 22: Gehäuseöffnung
- 24: Öffnungsbereich
- 26: Entlüftungselement
- 28: Umgebung
- 30: Elektroden/Separatoren-Anordnung
- 32: Schichtstruktur
- 34: Anodenschicht
- 36: Kathodenschicht
- 38: Separatorschicht
- 40: Anordnungsoberfläche
- 42: Rolle
- 44: Rolle
- 46: Rolle
- 48: Pfeil
- 50: Pfeil
- 52: Pfeil
- 54: Anordnungsbereitstellungseinheit
- 56: Folienbereitstellungseinheit
- 58: Kunststofffolie
- 60: Aufbringungseinheit
- 62: Einbringungseinheit
- 64: Punkte
- 66: Punkte
- 68: Pfeil
- 70: Bereich
- 72: Überlapp
- 74: Anfang
- 76: Ende
- 78: Pfeil

## Patentansprüche

1. Verfahren zum zumindest teilumfänglichen Herstellen einer elektrischen Energiespeicherzelle (10), wobei die Energiespeicherzelle (10) ein Speicherzellengehäuse (12) aufweist, in dem eine für den Betrieb der Energiespeicherzelle (10) benötigte Elektroden/Separatoren-Anordnung (30) untergebracht ist, wobei die Elektroden/Separatoren-Anordnung (30) eine Schichtstruktur (32) mit einer Abfolge von Kathodenschichten (36) und Anodenschichten (34) aufweist, wobei gegenüberliegende Kathoden- und Anodenschichten (36, 34) jeweils durch eine, insbesondere porös ausgebildete Separatorschicht (38) voneinander getrennt sind, und wobei die Elektroden/Separatoren-Anordnung (30) eine Anordnungsoberfläche (40) aufweist,
wobei das Verfahren folgende Schritte aufweist:
Bereitstellen der Elektroden/Separatoren-Anordnung (30),
Bereitstellen einer Kunststofffolie (58), und
Aufbringen der Kunststofffolie (58) auf zumindest einen Teilbereich der Anordnungsoberfläche (40);
**dadurch gekennzeichnet, dass**
die Kunststofffolie (58) selbsthaftend ist und keine darauf ausgebildete Klebstoffschicht aufweist, und
das Aufbringen der selbsthaftenden Kunststofffolie (58) durch Aufwickeln der selbsthaftenden Kunststofffolie (58) auf die Elektroden/Separatoren-Anordnung (30) erfolgt, wobei
durch das Aufbringen der selbsthaftenden Kunststofffolie die Schichtstruktur der Elektroden/Separatoren-Anordnung (30) fixiert wird.

2. Verfahren nach Anspruch 1, **dadurch gekennzeichnet, dass** die bereitgestellte Elektroden/Separatoren-Anordnung (30) eine lose Schichtstruktur oder eine Z-gefaltete Schichtstruktur oder eine gewickelte Schichtstruktur aufweist.

3. Verfahren nach einem der vorstehenden Ansprüche, **dadurch gekennzeichnet, dass** zumindest eine Lage, vorzugsweise zwei Lagen der selbsthaftenden Kunststofffolie (58) auf der Elektroden/Separatoren-Anordnung (30) aufgewickelt sind.

4. Verfahren nach einem der vorstehenden Ansprüche, **dadurch gekennzeichnet, dass** die Kunststofffolie (58) elastisch ausgeführt ist.

5. Verfahren nach einem der vorstehenden Ansprüche, **dadurch gekennzeichnet, dass** die Kunststofffolie (58) aus einem Polyolefin, insbesondere aus Polyethylen, oder aus einem Polyester besteht.

6. Verfahren nach einem der vorstehenden Ansprüche, **dadurch gekennzeichnet, dass** die Kunststofffolie (58) eine Dicke von 5 bis 50 µm, vorzugsweise 10 bis 30 µm, besonders vorzugsweise 12 bis 18 µm aufweist.

7. Verfahren nach einem der vorstehenden Ansprüche, **dadurch gekennzeichnet, dass** die Kunststofffolie (58) zumindest in einem Teilbereich perforiert ausgeführt ist.

8. Verfahren nach einem der vorstehenden Ansprüche, **gekennzeichnet durch** folgenden weiteren Schritt: Abtrennen der auf die Anordnungsoberfläche (40) aufgebrachten Kunststofffolie (58) von der weiterhin bereitgestellten, nicht aufgebrachten Kunststofffolie (58).

9. Verfahren nach einem der vorstehenden Ansprüche, **gekennzeichnet durch** folgenden weiteren, sich an das Aufbringen der Kunststofffolie (58) anschließenden Schritt: Einbringen der Elektroden/Separatoren-Anordnung (30) in das Speicherzellengehäuse (12).

10. Verfahren nach Anspruch 10, **dadurch gekennzeichnet, dass** es sich bei dem Speicherzellengehäuse (12) um ein aus Metall ausgeführtes Gehäuse oder um ein aus einer Verbundfolie, insbesondere Aluminium-Verbundfolie ausgeführtes Gehäuse handelt.

11. Vorrichtung zum zumindest teilumfänglichen Herstellen einer elektrischen Energiespeicherzelle (10), wobei die Energiespeicherzelle (10) ein Speicherzellengehäuse (12) aufweist, in dem eine für den Betrieb der Energiespeicherzelle (10) benötigte Elektroden/Separatoren-Anordnung (30) untergebracht ist, wobei die Elektroden/Separatoren-Anordnung (30) eine Schichtstruktur (32) mit einer Abfolge von Kathodenschichten (36) und Anodenschichten (34) aufweist, wobei gegenüberliegende Kathoden- und Anodenschichten (36, 34) jeweils durch eine, insbesondere porös ausgebildete Separatorschicht (38) voneinander getrennt sind, und wobei die Elektroden/Separatoren-Anordnung (30) eine Anordnungsoberfläche (40) aufweist, mit
einer Anordnungsbereitstellungseinheit (54), die dazu ausgebildet ist, die Elektroden/Separatoren-Anordnung (30) bereitzustellen,
einer Folienbereitstellungseinheit (56), die dazu ausgebildet ist, eine Kunststofffolie (58), die selbsthaftend ist und keine darauf ausgebildete Klebstoffschicht aufweist, bereitzustellen,
einer Aufbringungseinheit (60), die dazu ausgebildet ist, die selbsthaftende Kunststofffolie (58) auf zumindest einen Teilbereich der Anordnungsoberfläche (40) durch Aufwickeln der selbsthaftenden Kunststofffolie (58) auf die Elektroden/Separatoren-Anordnung (30) aufzubringen, wobei durch das Aufbringen der selbsthaftenden Kunststofffolie die Schichtstruktur der Elektroden/Separatoren-Anordnung (30) fixiert wird, und
einer Einbringungseinheit (62) zum Einbringen der mit der selbsthaftenden Kunststofffolie (58) umwickelten Elektroden/Separatoren-Anordnung (30) in das Speicherzellengehäuse (12).

12. Energiespeichermodul mit einer elektrischen Energiespeicherzelle (10), die mittels eines Verfahrens gemäß einem der Ansprüche 1 bis 10 hergestellt ist.

13. Traktionsbatterie mit einer elektrischen Energiespeicherzelle (10), die mittels eines Verfahrens gemäß einem der Ansprüche 1 bis 10 hergestellt ist.

## Claims

1. A method for producing at least partially an electrical energy storage cell (10), wherein the energy storage cell (10) has a storage-cell housing (12) in which an electrode/separator arrangement (30) required for operating the energy storage cell (10) is accommodated, wherein the electrode/separator arrangement (30) has a layered structure (32) with a sequence of cathode layers (36) and anode layers (34), wherein opposing cathode and anode layers (36, 34) are separated from each other in each case by a separator layer (38) which is especially of porous form, and wherein the electrode/separator arrangement (30) has an arrangement surface (40),
wherein the method comprises the following steps:
providing the electrode/separator arrangement (30),
providing a plastics film (58), and
applying the plastics film (58) to at least a partial region of the arrangement surface (40);
**characterised in that**
the plastics film (58) is self-adhesive and does not have any adhesive layer formed thereon, and
the application of the self-adhesive plastics film (58) takes place by winding the self-adhesive plastics film (58) onto the electrode/separator arrangement (30), wherein
the layered structure of the electrode/separator arrangement (30) is fixed by the application of the self-adhesive plastics film.

2. A method according to Claim 1, **characterised in that** the electrode/separator arrangement (30) provided has a loose layered structure or a Z-folded layered structure or a wound layered structure.

3. A method according to one of the preceding claims, **characterised in that** at least one layer, preferably two layers, of the self-adhesive plastics film (58) is/are wound on the electrode/separator arrangement (30).

4. A method according to one of the preceding claims, **characterised in that** the plastics film (58) is made elastic.

5. A method according to one of the preceding claims, **characterised in that** the plastics film (58) comprises a polyolefin, especially of polyethylene, or of a polyester.

6. A method according to one of the preceding claims, **characterised in that** the plastics film (58) has a thickness of 5 to 50 µm, preferably 10 to 30 µm, particularly preferably 12 to 18 µm.

7. A method according to one of the preceding claims, **characterised in that** the plastics film (58) is formed perforated at least in a partial region.

8. A method according to one of the preceding claims, **characterised by** the following further step: separating the plastics film (58) applied to the arrangement surface (40) from the plastics film (58) which is furthermore provided, but not applied.

9. A method according to one of the preceding claims, **characterised by** the following further step which follows on from the application of the plastics film (58): introducing the electrode/separator arrangement (30) into the storage-cell housing (12).

10. A method according to Claim 10, **characterised in that** the storage-cell housing (12) is a housing made of metal or a housing formed from a composite film, especially aluminium composite film.

11. A device for at least partially producing an electrical energy storage cell (10), wherein the energy storage cell (10) has a storage-cell housing (12) in which an electrode/separator arrangement (30) required for operating the energy storage cell (10) is accommodated, wherein the electrode/separator arrangement (30) has a layered structure (32) with a sequence of cathode layers (36) and anode layers (34), wherein opposing cathode and anode layers (36, 34) are separated from each other in each case by an especially porously formed separator layer (38), and wherein the electrode/separator arrangement (30) has an arrangement surface (40), with
an arrangement provision unit (54) which is designed to provide the electrode/separator arrangement (30),
a film provision unit (56) which is designed to provide a plastics film (58) which is self-adhesive and does not have any adhesive layer formed thereon,
an application unit (60) which is designed to apply the self-adhesive plastics film (58) to at least a partial region of the arrangement surface (40) by winding the self-adhesive plastics film (58) onto the electrode/separator arrangement (30), wherein the layered structure of the electrode/separator arrangement (30) is fixed by applying the self-adhesive plastics film, and
an introduction unit (62) for introducing the electrode/separator arrangement (30) which is wound with the self-adhesive plastics film (58) into the storage-cell housing (12).

12. An energy storage module with an electrical energy storage cell (10) which is produced by means of a method according to one of Claims 1 to 10.

13. A traction battery with an electrical energy storage cell (10), which is produced by means of a method according to one of Claims 1 to 10.

## Revendications

1. Procédé de fabrication d'au moins une partie de la périphérie d'une cellule d'accumulation d'énergie électrique (10), cette cellule d'accumulation d'énergie (10) comportant un boîtier de cellule d'accumulation (12) dans lequel est logé un agencement électrodes/ séparateurs (30) nécessaire pour le fonctionnement de la cellule d'accumulation d'énergie (10), l'agencement électrodes/ séparateurs (30) ayant une structure stratifiée (32) avec une succession de couches cathodiques (36) et de couches anodiques (34), des couches cathodiques et des couches anodiques (36, 34) superposées étant respectivement séparées par une couche de séparateur (38) en particulier poreuse, et l'agencement électrodes/séparateurs (30) ayant une surface d'agencement (40), le procédé comprenant les étapes suivantes consistant à :
se procurer l'agencement électrodes/séparateurs (30),
se procurer un film en matériau synthétique (58), et
appliquer le film en matériau synthétique (58) sur au moins une zone
partielle de la surface (40) de l'agencement,
**caractérisé en ce que**
le film en matériau synthétique (58) est autoadhésif et ne comporte pas de couche de colle formée sur celui-ci,
l'application du film en matériau synthétique autoadhésif (58) est effectuée par enroulement du film en matériau synthétique autoadhésif (58) sur l'agencement électrodes/ séparateurs (30),
l'application du film en matériau synthétique autoadhésif permettant de fixer l'agencement électrodes/séparateurs (30).

2. Procédé conforme à la revendication 1,
**caractérisé en ce que**
l'agencement électrodes/ séparateurs (30) fourni à une structure stratifiée lâche ou une structure de couche repliée en forme de Z ou une structure stratifiée enroulée.

3. Procédé conforme à l'une des revendications précédentes, **caractérisé en ce qu'**
au moins une couche de préférence deux couches du film en matériau synthétique autoadhésif (58) est(sont) enroulée(s) sur l'agencement électrodes/ séparateurs (30).

4. Procédé conforme à l'une des revendications précédentes, **caractérisé en ce que**
le film en matériau synthétique (58) est élastique.

5. Procédé conforme à l'une des revendications précédentes, **caractérisé en ce que**
le film en matériau synthétique (58) est réalisé en une polyoléfine, en particulier en polyéthylène ou en un polyester.

6. Procédé conforme à l'une des revendications précédentes, **caractérisé en ce que**
le film en matériau synthétique (58) a une épaisseur de 5 à 50 µm de préférence de 10 à 30 µm et de façon particulièrement préférentielle de 12 à 18 µm.

7. Procédé conforme à l'une des revendications précédentes, **caractérisé en ce que**
le film en matériau synthétique (58) est perforé au moins dans une zone partielle.

8. Procédé conforme à l'une des revendications précédentes, **caractérisé en ce qu'**il comporte l'étape suivante consistant à :
découper le film en matériau synthétique (58) appliqué sur la surface (40) de l'agencement pour le séparer du film de matériau (58) également fourni non appliqué.

9. Procédé conforme à l'une des revendications précédentes, **caractérisé en ce qu'**
il comporte l'étape suivante se connectant à l'application du film en matériau synthétique (58) consistant à :
introduire l'agencement électrodes/séparateurs (30) dans le boîtier des cellules d'accumulation (12).

10. Procédé conforme à la revendication 10,
**caractérisé en ce que**
le boîtier des cellules d'accumulation (12) est constitué par un boîtier métallique ou par un boîtier réalisé à partir d'un film composite, en particulier d'un film composite à base d'aluminium.

11. Dispositif de fabrication au moins une partie de la périphérie d'une cellule d'accumulation d'énergie électrique (10), cette cellule d'accumulation d'énergie (10) ayant un boîtier de cellules d'accumulation (12) dans lequel est logé un agencement (30) électrodes/séparateurs nécessaire pour le fonctionnement de la cellule d'accumulation d'énergie (10), l'agencement électrodes/séparateurs (30) ayant une structure stratifiée (32) comprenant une succession de couches cathodiques (36) et de couches anodiques (34), des couches cathodiques et des couches anodiques (36, 34) superposées étant respectivement séparées par une couche de séparateur (38) en particulier poreuse, et l'agencement électrodes/séparateurs (30) ayant une surface d'agencement (40), comprenant :
une unité de fourniture d'agencement (54) qui est réalisée pour fournir l'agencement électrodes/séparateurs (30),
une unité de fourniture de film (56) qui est réalisée pour fournir un film en matériau synthétique (58) qui est autoadhésif et ne comporte pas de couche de colle formée sur lui,
une unité d'application (60) qui est réalisée pour permettre d'appliquer le film de matériau synthétique autoadhésif (58) sur au moins une zone partielle de la surface de l'agencement (40) par enroulement du film en matériau synthétique autoadhésif (58) sur l'agencement électrodes/séparateurs (30), l'application du film en matériau synthétique autoadhésif permettant de fixer la structure stratifiée de l'agencement électrodes/séparateurs (30), et
une unité d'insertion (62) permettant d'introduire l'agencement électrodes/ séparateurs (30) enveloppé le film par un matériau synthétique autoadhésif (58) dans le boîtier des cellules d'accumulation (12).

12. Module accumulateur d'énergie comprenant une cellule d'accumulation électrique (10) qui est obtenue par la mise en œuvre d'un procédé conforme à l'une des revendications 1 à 10.

13. Batterie de traction comprenant une cellule d'accumulation d'énergie électrique (10) obtenue par le mise en oeuvre d'un procédé conforme à l'une des revendications 1 à 10.
